**Europäisches Patentamt**

**European Patent Office**

**Office européen des brevets**

(11) Veröffentlichungsnummer: **0 340 384**
**A2**

## (12) EUROPÄISCHE PATENTANMELDUNG

(21) Anmeldenummer: **89100847.6**

(22) Anmeldetag: **19.01.89**

(51) Int. Cl.⁴: **F02M 35/10 , F02M 31/12**

(30) Priorität: **03.05.88 DE 3814955**

(43) Veröffentlichungstag der Anmeldung:
**08.11.89 Patentblatt 89/45**

(84) Benannte Vertragsstaaten:
**AT BE CH DE ES FR GB IT LI NL SE**

(71) Anmelder: **Firma Carl Freudenberg**
**Höhnerweg 2-4**
**D-6940 Weinheim/Bergstrasse(DE)**

(72) Erfinder: **Börger, Herbert, Dr.**
**Bothe Platz 50**
**D-6900 Heidelberg(DE)**

(74) Vertreter: **Weissenfeld-Richters, Helga, Dr.**
**Höhnerweg 2-4**
**D-6940 Weinheim/Bergstrasse(DE)**

(54) **Ansaugverteiler.**

(57) Ein Ansaugverteiler für einen Verbrennungsmotor, umfassend einen von einer Wandung umschlossenen Strömungskanal. Die Wandung (1) besteht zumindest in einem Teilbereich aus elektrisch leitfähigem, polymerem Werkstoff und ist durch einen Abstand voneinander aufweisende Anschlußstücke (2,7) mit einer elektrischen Spannungsquelle (3) verbindbar und durch dieselbe erwärmbar.

Fig. 3

EP 0 340 384 A2

## Ansaugverteiler

Die Erfindung betrifft einen Ansaugverteiler nach dem Oberbegriff von Anspruch 1.

Ein solcher Ansaugverteiler ist bekannt. Er besteht aus einer Aluminium-Gußlegierung und hat den bestimmungsgemäßen Zweck, das in dem Vergaser oder vom "Single-Point"-Einspritzsystem aufbereitete Gemisch aus Benzintröpfchen und Luft den einzelnen Zylindern des Verbrennungsmotors zuzuführen. Beim Kaltstart neigt das Gemisch allerdings zur Kondensation an der Innenfläche des Ansaugverteilers, was letztlich eine "Abmagerung" des Gemisches bewirkt und ein schlechtes Betriebsverhalten des Motors zur Folge haben kann. Es ist daher erforderlich, für diese Betriebsphase ein "fettes" Gemisch zur Verfügung zu stellen, was allerdings einen hohen Kraftstoffverbrauch und hohe Emissionswerte bedingt.

Zur Vermeidung diesen Nachteiles ist es bei der eingangs angesprochenen Ausführung vorgesehen, den Ansaugverteiler zumindest in einem Teilbereich doppelwandig auszubilden und durch den Zwischenraum der beiden Wandungen Kühlmittel hindurchzuleiten, um eine schnelle Aufwärmung zu bewirken. In der Kaltstartphase ist das Kühlmittel indessen noch nicht genügend erwärmt, um die angesprochenen Probleme wirksam zu beseitigen.

Weitere Probleme können sich bei der eingangs genannten Ausführung beim erneuten Starten des gerade abgeschalteten, heißen Motors ergeben. In einer entsprechenden Betriebssituation ist ein großer Hitzestau im Bereich des Zylinderkopfes zu beobachten, der über das Aluminium-Saugrohr eine starke Aufheizung des Vergasers zur Folge hat. Der im Vergaser enthaltene Kraftstoff wird dadurch verdampft, was das erneute Starten erschwert. Man hat daher schon vorgeschlagen, zwischen dem Vergaser und dem Ansaugverteiler einen, in thermischer Hinsicht isolierenden, Zwischenflansch vorzusehen, der beispielsweise aus Gummi bestehen kann. Seine Beschaffung und Montage erfordern indessen zusätzlichen Aufwand.

Nach einem anderen Vorschlag ist es bereits bekannt, in dem aus metallischem Werkstoff bestehenden Ansaugverteiler eines Verbrennungsmotors einen elektrischen Heizkörper zur Aufwärmung des Verbrennungsgemisches vorzusehen. Die eingangs angesprochenen Probleme sowohl hinsichtlich des Kaltstarts als auch hinsichtlich des Warmstarts lassen sich damit allerdings noch nicht in befiedigender Weise beheben.

Der Erfindung liegt die Aufgabe zugrunde, einen Ansaugverteiler zu zeigen, der bei kostengünstiger Herstellbarkeit und bei einfacher Montierbarkeit einen problemlosen Kalt- und Warmstart ermöglicht und es dabei weitgehend entbehrlich macht, die Einstellung des Verbrennungsgemisches zu verändern.

Diese Aufgabe wird erfindungsgemäß bei einem Ansaugverteiler der eingangs genannten Art mit den kennzeichnenden Merkmalen von Anspruch 1 gelöst. Auf vorteilhafte Ausgestaltungen nehmen die Unteransprüche bezug.

Bei dem erfindungsgemäßen Ansaugverteiler besteht die den Strömungskanal umschließende Wandung vollständig aus polymerem Werkstoff, wobei der Werkstoff zumindest in dem Teilbereich elektrisch leitfähig und durch einen Abstand voneinander aufweisende Anschlußstücke mit einer elektrischen Spannungsquelle verbindbar und durch dieselbe erwärmbar ist.

Der Anteil der auf diese Weise erwärmbaren, inneren Oberfläche des des Strömungskanals ist beliebig groß festlegbar, was die Möglichkeit eröffnet, Kraftstoffkondensationen an dieser Oberfläche während der Kaltstartphase so gut wie völlig auszuschließen. Probleme beim Kaltstart sind daher nicht mehr zu erwarten.

In bezug auf einen problemlosen Warmstart wirkt sich demgegenüber das ausgezeichnete thermische Isolierverhalten des die Wandung des erfindungsgemäßen Ansaugverteilers bildenden polymeren Werkstoffes aus. Der Vergaser wird dadurch in ausgezeichneter Weise thermisch von dem Zylinderkopf isoliert, was eine Kraftstoffverdampfung innerhalb des Vergasers verhindert und die Anwendung sekundärer Isolierflansche entbehrlich macht. Die Montage des erfindungsgemäßen Ansaugverteilers ist dadurch denkbar einfach.

Der erfindungsgemäße Ansaugverteiler läßt sich unter Anwendung an sich bekannter Kunststoff-Verarbeitungstechniken kostengünstig und in stets gleichbleibender Qualität erzeugen, insbesondere unter Verwendung der Kunststoff-Spritztechnik, welche sich eines verlorenen Kerns bedient. Die äußere Kontur des Ansaugverteilers kann dadurch in großem Maß modifiziert und den unterschiedlichsten Typen von Verbrennungsmotoren auf einfache Weise angepaßt werden.

Der Gegenstand der Erfindung wird nachfolgend anhand der Zeichnung weiter erläutert. Es zeigen:

Figur 1 einen Ansaugverteiler, der vollständig aus elektrisch leitfähigem und elektrisch erwärmbaren polymerem Werkstoff besteht.

Figur 2 eine Ausführung, bei der nur ein Teilbereich der Wandung aus elektrisch leitfähigem und elektrisch erwärmbarem, polymerem Werkstoff besteht.

Figur 3 eine Ausführung, ähnlich Figur 2, bei der der elektrisch leitfähige Teilbereich der Wandung innen-und außenseitig mit einer Beschichtung aus elektrisch isolierendem, polymerem Werkstoff versehen ist.

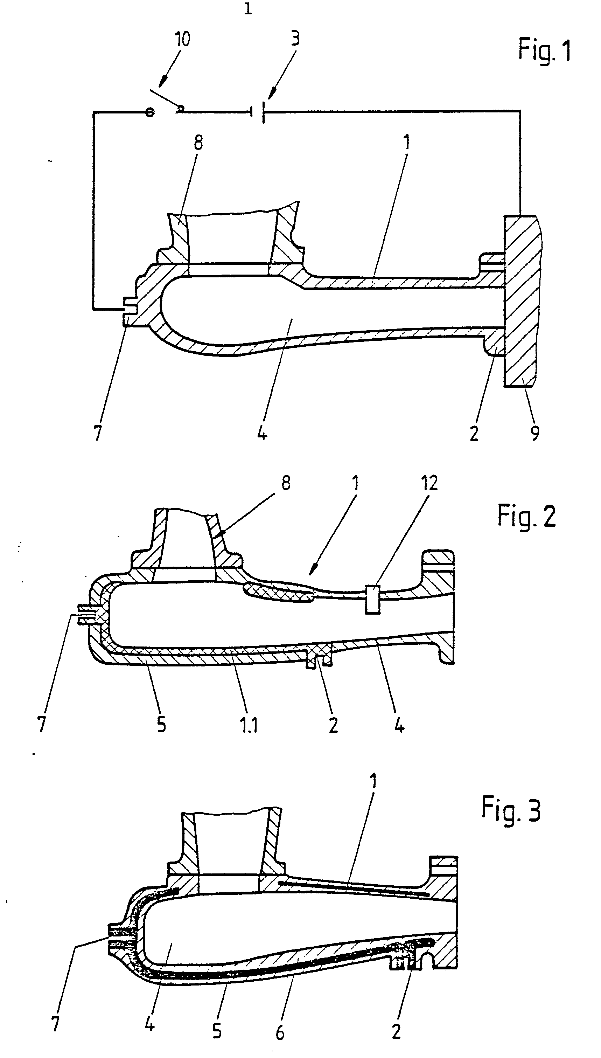

Bei dem in Figur 1 gezeigten Ansaugverteiler ist das Funktions-Prinzip während der bestimmungsgemäßen Verwendung angedeutet. Der Ansaugverteiler umschließt mit der vollständig aus elektrisch leitfähigem, polymerem Werkstoff bestehenden Wandung 1 den Strömungskanal 4 und ist zwischen dem Vergaser 8 und dem Zylinderkopf 9 des zugehörigen Verbrennungsmotors angeordnet. Für die gegenseitige Verbindung sind jeweils Flansche vorgesehen, unter denen der zylinderkopfseitige Flansch zugleich die Funktion eines elektrischen Anschlußstückes hat, über welches die Wandung 1 in ständiger, elektrisch leitender Verbindung mit dem Minuspol der zugehörigen Spannungsquelle 3 steht, beispielsweise den Minuspol der Batterie des Kraftfahrzeuges.

In größtmöglichem Abstand von dem Anschlußstück 2 ist das Anschlußstück 7 vorgesehen. Dieses weist eine Anschlußklemme für ein Kabel auf, welches über ein Schaltrelais 10 mit dem Pluspol der zugehörigen Spannungsquelle 3 verbunden ist. Das letztlich einen Schalter bildende Schaltrelais 10 wird nur bei besonderen Gegebenheiten geschlossen, insbesondere während der Kaltlaufphase eines Verbrennungsmotors. Es hat die sofortige Erwärmung der gesamten Wandung 1 des Ansaugverteilers zur Folge, wodurch Kraftstoffkondensationen an der inneren Oberfläche nicht mehr möglich sind. Ein problemloses Kaltstartverhalten des Motors ist hierdurch gewährleistet.

Zugleich ergibt sich die Möglichkeit, das den Strömungskanal passierende Kraftstoff/Luftgemisch durch die enorm große Ausdehnung der inneren Oberfläche der Wandung 1 in jedem wünschenswerten Maße zu erwärmen. Hierzu ist es allerdings erforderlich, in dem Strömungskanal einen Temperaturfühler anzubringen, was während der Herstellung des Ansaugverteilers problemlos ist, und das Schaltrelais 10 durch eine Regelungseinrichtung zu ersetzen. In bezug auf die Erzielung eines besonders sparsamen Kraftstoffverbrauches sowie in bezug auf die Erzielung günstiger Emissionswerte des Verbrennungsmotors kann sich eine entsprechende Maßnahme jedoch empfehlen.

Bei der Ausführung nach Figur 2 ist die vollständige aus polymerem Werkstoff bestehende Wandung 1 nur in dem Teilbereich 1.1 elektrisch leitfähig und durch einen Abstand voneinander aufweisender Anschlußstücke 2,7 mit einer elektrischen Spannungsquelle verbindbar und durch dieselbe erwärmbar. Die Wandung 1 besteht im übrigen aus elektrisch nicht leitfähigem, polymerem Werkstoff, was die Einformung eines Temperaturfühlers 12 unmittelbar während der Herstellung erleichtert und es zugleich ermöglicht, den aus elektrisch leitfähigem, polymerem Werkstoff bestehenden Teilbereich 1.1 der Wandung auf der von dem Strömungskanal 4 abgewandten, nach außen weisenden Seite mit einer elektrisch isolierenden Beschichtung 5 zu überziehen. Neben einer Verminderung der Gefahr elektrischer Kurzschlüsse ergibt sich hierdurch eine Reduzierung des spezifischen Verbrauchs an elektrischer Energie. Für den wirtschaftlichen Betrieb des erfindungsgemäßen Ansaugverteilers, ist insbesondere der letztgenannte Vorteil von entscheidender Bedeutung.

Die in Figur 3 gezeigte Ausführung ist hinsichtlich ihrer äußeren Gestalt den vorstehend beschriebenen Ausführungen ähnlich. Die vollständig aus polymerem Werkstoff bestehende

Die in Figur 3 gezeigte Ausführung ist hinsichtlich ihrer äußeren Gestalt den vorstehend beschriebenen Ausführungen ähnlich. Die vollständig aus polymerem Werkstoff bestehende Wandung ist indessen so gestaltet, daß der elektrisch leitfähige und durch Verbindung mit einer elektrischen Spannungsquelle erwärmbare Teilbereich 1.1 sowohl innen- als auch außenseitig durch eine Beschichtung aus nichtleitendem, polymerem Werkstoff überdeckt ist. Beide Beschichtungen gehen an den Enden lückenlos ineinander über, wodurch der elektrisch leitfähige und erwärmbare Teilbereich vollständig eingekapselt ist. Die mechanische und die chemische Widerstandfähigkeit ist dementsprechend ganz besonders groß. Was einer solchen Ausführung des erfindungsgemäßen Ansaugverteilers eine gute Dauerhaltbarkeit verleiht und gleichbleibende Eigenschaften in elektrischer Hinsicht über die gesamte Lebensdauer.

Die von dem Strömungskanal 4 abgewandte, äußere Beschichtung 5 hat eine größere Schichtdicke als die dem Strömungskanal 4 zugewandte, innere Beschichtung 6. Sie beträgt im erstgenannten Falle etwa 1,5 mm im letztgenannten Falle etwa 3,4 mm.

Der erfindungsgemäße Ansaugverteiler unterscheidet sich von den bisher bekannten Ausführungen durch eine deutliche Reduzierung des Gewichtes. Er läßt sich kostengünstig erzeugen und ermöglicht bei günstigen Emissionswerten des damit ausgestatteten Verbrennungsmotors einen sparsamen Betrieb und die Verwendung eines besonders einfach gebauten Gemischaufbereitungsaggregates. Sowohl die bisherigen Probleme hinsichtlich des Kaltstarts als auch hinsichtlich des Warmstarts sind völlig beseitigt. Die Montage ist problemlos einfach und macht die bisherige Verwendung von Kühlwasseranschlußschläuchen und ähnlichem entbehrlich.

## Ansprüche

1. Ansaugverteiler für einen Verbrennungsmotor, umfassend einen von einer elektrisch leitfähigen Wandung umschlossenen Strömungskanal, der wenigsten in einem Teilbereich durch die Wandung erwärmbar ist, dadurch gekennzeichnet, daß die Wandung (1) zumindest in dem Teilbereich aus elektrisch leitfähigem, polymerem Werkstoff besteht und durch einen Abstand voneinander aufweisende Anschlußstücke (2,7) mit einer elektrischen Spannungsquelle (3) verbindbar und durch dieselbe erwärmbar ist.

2. Ansaugverteiler nach Anspruch 1, dadurch gekennzeichnet, daß die Wandung (1) auf der von dem Strömungskanal (4) abgewandten Seite mit einer elektrisch nicht leitfähigen, polymeren Beschichtung (5) versehen ist.

3. Ansaugverteiler nach Anspruch 1 bis 2, dadurch gekennzeichnet, daß die Wandung auf der dem Strömungskanal (4) zugewandten Seite mit einer elektrisch nichtleitenden polymeren Beschichtung (6) versehen ist.

4. Ansaugverteiler nach Anspruch 1 bis 3, bei dem der Teilbereich der Wandung aus elektrisch leitfähigem Werkstoff innen- und außenseitig mit Beschichtungen aus elektrisch nicht leitfähigem Werkstoff versehen ist, dadurch gekennzeichnet, daß die von dem Strömungskanal (4) abgewandte, äußere Beschichtung (5) eine größere Schichtdicke hat als die dem Strömungskanal (4) zugewandte innere Beschichtung (6).

Fig. 1

Fig. 2

Fig. 3